# EUROPÄISCHE PATENTSCHRIFT

(11) **EP 0 502 348 B1**
(45) Veröffentlichungstag und Bekanntmachung des Hinweises auf die Patenterteilung: **27.10.1993**
(21) Anmeldenummer: 92102472.5
(22) Anmeldetag: 14.02.1992
(51) Int. Cl.: F16B 13/14

(54) **Verbundanker**
Anchoring device
Dispositif d'ancrage

(30) Priorität: 28.02.1991 DE 4106311
(43) Veröffentlichungstag der Anmeldung: 09.09.1992
(73) Patentinhaber: MÄCHTLE GmbH, D-71665 Vaihingen (DE)
(72) Erfinder: Mächtle, Daniel, W-7015 Korntal-Münchingen 1 (DE)
(74) Vertreter: Raeck, Wilfrid, Dipl.-Ing.

(56) Entgegenhaltungen:
- WO-A-89/08202
- WO-A-89/08202
- DE-A- 1 935 150
- FR-A- 1 253 773
- GB-A- 2 028 451
- GB-A- 2 078 897

## Beschreibung

Die Erfindung betrifft einen Verbundanker zur Befestigung einer Ankerstange in einem Bohrloch, gemäß dem Gattungsbegriff des Anspruches 1.

Ein aus UK 953 056 bekannter Verbundanker der zuvor genannten Art und umfaßt eine Glaspatrone mit einer Füllung aus Zement, Gips, Kalk oder anderem Trockenmörtel sowie aus einem sprödem Innenbehälter, der Wasser und eventuell ein darin gelöstes Schnellhärtemittel kapselt. Die rückwärtige Öffnung der Patrone ist durch eine Abdeckung hermetisch versiegelt. Auf der Abdekkung ist ein Schaumstoff-Pfropfen befestigt, der eine zentrische Öffnung enthält und außen an der Bohrlochwand anliegt. Dieser bekannte Verbundanker ist insofern umständlich oder nachteilig, als zum Verschließen der Patrone mittels einer versiegelnden Abdeckung und zum Befestigen des Schaumstoffes auf der Abdeckung mehrere zeitaufwendige Arbeitsgänge notwendig sind. Da von der rotierend angetriebenen Ankerstange erhebliche Kräfte ausgeübt werden, besteht Gefahr, daß der an den zerbrechenden Abdeckungsteilen anhaftender Schaumstoff zerrissen wird und deshalb die dünnflüssige Zementmischung nicht mehr ausreichend abgedichetet wird. Schon bei horizontalem Bohrungsverlauf muß damit gerechnet werden, daß Wasser aus dem Innenbehälter an seinem zuerst zerstörten Ende ausläuft, also am Bohrlocheingang Wasserüberschuß vorhanden ist und der pulverförmige Zementmörtel von der Mitte bis zum Grund der Bohrung trocken bleibt. Das Problem einer unvollständigen Durchmischung des Bindemittels wird bei allen aufwärts geneigten und erst recht bei senkrecht nach oben geführten Bohrungen noch verstärkt. In all diesen Fällen ist zu befürchten, daß die Ankerstange im Bohrloch nicht fest eingebunden wird, und zwar im Hinblick auf die am Bohrlocheingang mit Wasserüberschuß entstehende dünnflüssige Zementschlempe, die aufgrund des bei Zerstörung der Abdeckung mit zerreißenden Schaumstoff- Pfropfens aus der Bohrung ausläuft.

Der Erfindung liegt die Aufgabe zugrunde, einen Verbundanker der vorgenannten Art dahingehend zu verbessern, daß unabhängig von der Richtung des Bohrlochverlaufes die pulverförmige Komponente über die gesamte Bohrlochtiefe gleichmäßig mit Flüssigkeit vermischt und somit die Ankerstange bestmöglich verankert wird.

Erfindungsgemäß wird diese Aufgabe durch die kennzeichnenden Merkmale des Hauptanspruches gelöst. Bei dieser Lösung ist vorteilhaft, daß die in die Patrone eindringende Ankerstange den Innenbehälter nur schrittweise zerstört und die flüssige Komponente nur in Teilmengen freigesetzt wird, die ausreichen, um die umgebende Pulverkomponente ausreichend zu tränken und anzuteigen. Die während des Ankerstangenvortriebs portionierte Freisetzung von Wasser erfolgt unabhängig davon, ob die Innenbehälterabschnitte miteinander in Verbindung stehen oder geschlossen sind.

Anstelle von bisher üblichem Kunstharz und Härter werden für die Erfindung anorganische Stoffe, z.B. schnell abbindende Zement/Wasser-Mischungen angewendet, die ökologisch unbedenkliche Produkte darstellen und auch allen Anforderungen der Brandsicherheit entsprechen. Dabei wird erfindungsgemäß das aus der niedrigen Viskosität von Wasser resultierende Problem beseitigt, daß die bei der anfänglichen Zerstörung des Innenbehälter entstehende dünnflüssige Zementschlempe aus dem Bohrloch herausfließt, bevor die vollständige Durchmischung vollzogen ist. Da die flüssige Komponente nur in Teilmengen freigesetzt wird, können die benachbarten Bereiche mit dem dort vorhandenen trokkenen Zement/Füllstoff-Gemenge einschließlich der entstehenden Glassplitter über die gesamte Bohrlochtiefe intensiv vermischt werden.

Der Innenbehälter kann eine lineare Folge von Ausbauchungen und Verengungen aufweisen und sich ungefähr über die Länge der Patrone erstrecken. Diese kugelförmigen, länglichen oder abgeflachten Ausbauchungen stellen sicher, daß über die Tiefe der Patrone verteilt sämtliche Bereiche der trocknen Komponente gleichmäßig die für ihre Anmischung notwendigen Flüssigkeitsmengen erhalten und kein örtlicher Flüssigkeitsüberschuß entsteht. Die gleichmäßige Flüssigkeitsverteilung wird noch verbessert, wenn der Innenbehälter an den Verengungen zwischen den Ausbauchungen jeweils geschlossen ist. Damit wird bei Überkopfmontage gesicher, daß selbst in der Tiefe der Patrone, d.h. an der höchsten Stelle im Bohrloch Flüssigkeit zum Anmischen des Bindemittels vorhanden ist.

Um den Innenbehälter beim Einfüllen der Pulverkomponente in die Patrone und auch während Lagerung und Transport zentriert zu halten, können spinnenförmige Positioniermittel aus dünnen Radialarmen bestehen, die von einem auf eine Verengung aufschiebbaren offenen Ring oder ähnlichen Mittelteil ausgehen und bis an die Patronenwand reichen können. Die dünnen Radialarme oder -flügel können aus sprödem oder nachgiebigem Material bestehen und beim Eindrehen der Ankerstange die Durchmischung fördern.

Gemäß einer Variante kann die flüssige Komponente in einer Mehrzahl von Kugeln gekapselt sein, deren Durchmesser z.B. gleich oder kleiner ist als der Patronenradius. Anstelle von Kugeln kann der Innenbehälter auch aus einer Mehrzahl geschlossener Ampullen bestehen, deren Länge kleiner oder nicht viel größer als der Durchmesser der Patrone ist und die in gleichmäßiger Verteilung in die Patrone eingefüllt sind. Auch eckige Hohlkörperformen sind möglich. Wenn der Innenbehälter aus einem schraubenförmigen Glasrohr besteht, sollte der Innendurchmesser der Schraube kleiner sein als der Durchmesser der Ankerstange, um die Zerstörbarkeit zu sichern. Das Glasrohr kann mehrere Verengungen aufweisen, zwischen denen die flüssige Komponente portionierte Volumina bildet.

Um die Innenbehälter innerhalb der Patrone beim Versand und Gebrauch gleichmäßig verteilt zu halten, können ihrer Art angepaßte Haltemittel dienen. Diese haben geringe Querschnitte, damit sie den inneren Verbund des Bindemittels nicht beeinträchtigen. Spinnen ohne Mittelteil können Abstandshalter bilden, um Kugeln oder andere Teilbehälter in der Patrone verteilt zu halten. Ein anderer Abstandshalter ist beispielsweise eine in die Patrone im Zickzack-Verlauf eingelegte Folge biegsamer oder abknickbarer Rahmenstrukturen mit dünnen Streben.

Gemäß einem anderen wichtigen Merkmal dient zur Abdichtung des Bohrlocheinganges eine aus Gummi oder begrenzt nachgiebigem Plastikmaterial bestehende Verschlußkappe, die einen von der Ankerstange perforierbaren Deckel und einen axialen Rand aufweist, der die Patrone umfaßt und eine an der Bohrlochwand anliegende Dichtung bildet.

Die Verschlußkappe kann vorgeprägte Radiallinien enthalten, durch die beim Eintreiben der Ankerstange sich an deren Umfang abdichtend anlegende Lamellen enstehen. Bei einer Variante enthält die Verschlußkappe eine zentrische Öffnung, deren Rand einen Wulst oder eine Manschette zur abgedichteten Anlage an der Ankerstange aufweist. Wenn der Rand der Verschlußkappe die Patrone umfaßt und an dieser dicht anliegt, braucht das Einfüllende der Patrone nicht zwingend zugeschmolzen oder versiegelt zu werden. Vielmehr kann die Verschlußkappe die Funktion des Patronenverschlusses während deren Lagerung und Transport und später beim Gebrauch die zusätzliche Funktion der Abdichtung des Bohrloches übernehmen. Die Öffnung der Verschlußkappe wird bis zur Montage des Verbundankers durch eine aufgeklebte Folie odgl. nach außen abgedichtet.

Der Deckel kann als Anschlag zur Einsteckbegrenzung für die Verschlußkappe in das Bohrloch einen größeren Durchmesser als deren axialer Rand aufweisen.

Ausführungsbeispiele des Verbundankers nach der Erfindung sind nachfolgend anhand der Zeichnungen näher erläutert. Darin zeigen, jeweils schematisch,
- Fig. 1: einen axialen Längsschnitt durch ein Bohrloch mit Verbundanker vor dem Eindrehen der Ankerstange,
- Fig. 2 bis 4: Längsschnitte durch Patronen mit unterschiedlichen Innenbehältern und
- Fig. 5 und 6: Ansichten eines Armkreuzes bzw. einer Rahmenstruktur als Positioniermittel für Innenbehälterteile.

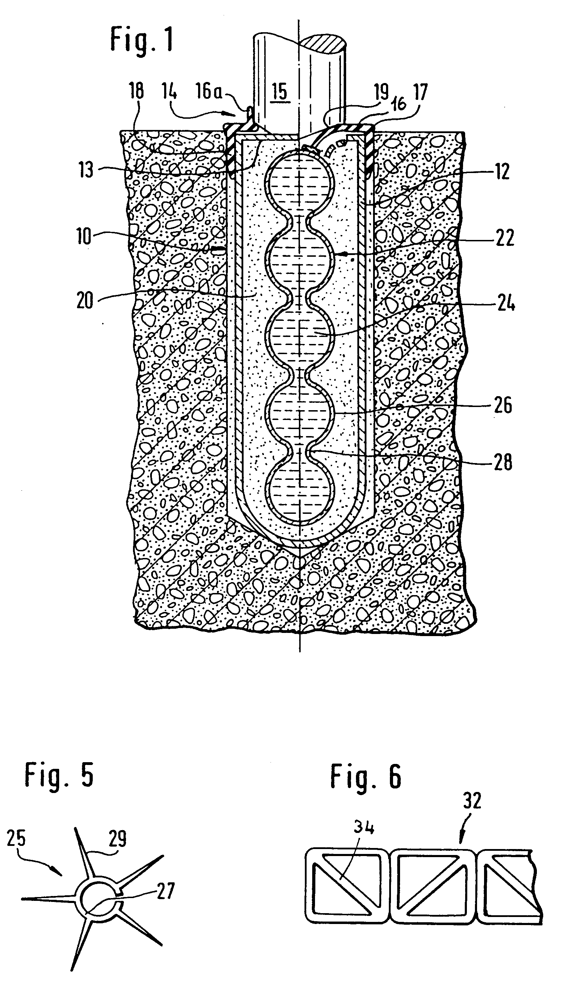

In Fig. 1 ist in ein Bohrloch 10 mit passend bearbeiteter Tiefe und Durchmesser die einem kurzen Reagenzglas ähnliche Patrone 12 eines Verbundankers eingesteckt. Sie enthält als pulverförmige Komponente 20 Zement, gegebenenfalls in einem Gemenge mit körnigem Füllstoff, sowie einen sich vorzugsweise über die gesamte Patronenlänge erstreckenden Innenbehälter 22, in dem Wasser 24 als flüssige Komponente gekapselt ist.

Der aus Glas oder anderem spröden Material bestehende Innenbehälter 22 besitzt gemäß Fig. 1 eine Folge von Ausbauchungen 26 und Verengungen 28. Um den Innenbehälter 22 beim Einfüllen der pulvrigen Komponente 20 in der Patrone 12 zentriert zu halten, kann im Bereich einer oder mehrerer Verengungen 28 eine in Fig. 5 beispielsweise dargestellte Haltespinne 25 angeordnet sein, die ein offenes Mittelteil 27 und dünne Arme 29 aufweist, die sich an der Innenwand der Patrone abstützen.

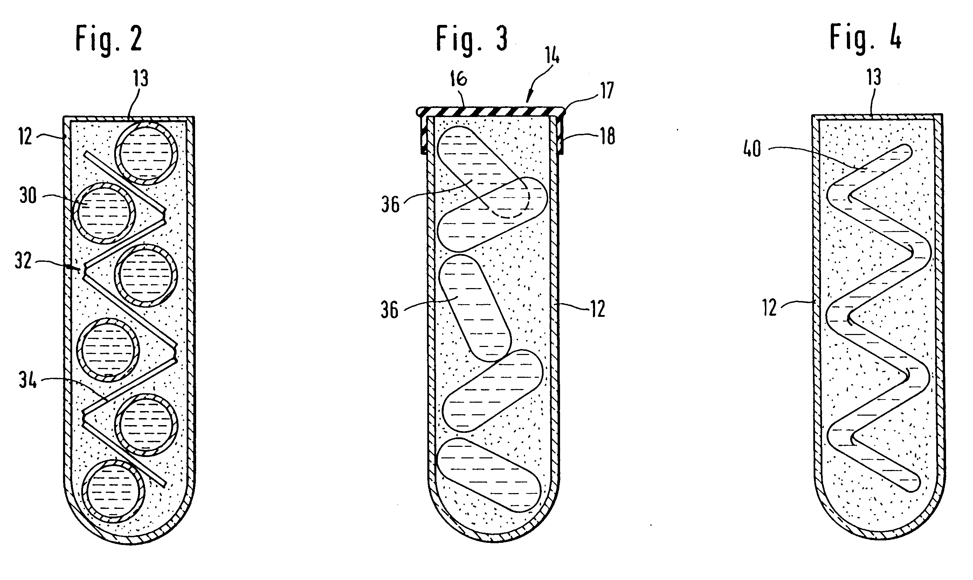

Nachdem in die Patrone beide Komponenten eingefüllt worden sind, wird sie verschlossen. Bei automatischer Füllung kann das offene Ende der Patrone zugeschmolzen oder durch eine hermetisch versiegelte Rückwand geschlossen werden. Andererseits kann die offene Patrone mit einer in Fig. 1 oder 3 gezeigten Verschlußkappe 14 verschlossen werden. Die von der Ankerstange perforierbare Verschlußkappe 14 besteht aus formbeständigem Gummi oder einem nachgiebigen Kunststoff und umfaßt einen radialen Deckelteil 16 sowie einen sich daran in Axialrichtung anschließenden Umfangsrand 18. Der Rand 18 der Verschlußkappe kann radial einwärts vorgespannt sein, um sich eng an die Patrone anzulegen. Die Außenseite des Randes 18 kann mit einem beispielsweise aufgerauhten Wulst oder einer anderen Verdickung versehen sein, um zwischen dem Patronenumfang und der Wand des Bohrloches 10 abdichtend zu wirken. Vorzugsweise ist der Umfang des Deckels 16 der Verschlußkappe 14 gegenüber dem Rand 18 erweitert, so daß der dort entstehende Außenwulst 17 als Anschlag am Bohrlocheingang anliegt, um die Einstecktiefe der Verschlußkappe zu begrenzen und auf jeden Fall am Bohrlocheingang eine sichere Abdichtung zu erreichen.

Die Verschlußkappe 14 enthält von ihrer Mitte ausgehende vorgeprägte radiale Schnittlinien, so daß beim Eintreiben der Ankerstange 15 in Fig. 1, rechts von der Mittellinie gezeichnet, eine Öffnung mit abdichtend anliegenden Zungen oder Lamellen 19 entsteht. Links von der Mittellinie in Fig. 1 ist als Variante die Verschlußkappe 14 mit einer zentrischen Öffnung versehen, deren Rand einen Wulst 16a oder eine Manschette zum Abdichten der Ankerstange bildet.

Die Verengungen 28 des Innenbehälters 22 gemäß Fig. 1 sorgen dafür, daß die Ankerstange in der Patrone die mit Flüssigkeit gefüllten Teilbehälter zeitlich nacheinander zerstört und daß die Flüssigkeit an einem schnellen Ausfließen in Richtung der zuerst zerstörten Ausbauchungen 26 gehindert wird. Während des Eindrehens der Ankerstange stehen folglich in sämtlichen Tiefenbereichen der Patrone einzelne portionierte Flüssigkeitsmengen zur Verfügung, die eine gleichmäßige Durchmischung sowohl der beiden Komponenten, der Füllstoffe als auch der dabei zerstörten Patrone 12 und des Innenbehälters gewährleisten. Die Ankerstange 15 kann am vorderen Ende mit einer stumpfwinkligen Arbeitskante versehen sein, die beim Vortrieb das Glas des Innenbehälters und der Patrone zerstört und somit die Glassplitter zu einem Bestandteil der Verbundmasse werden läßt.

Gemäß Fig. 2 besteht der Innenbehälter aus einer Mehrzahl von mit Flüssigkeit gefüllter Kugeln 30 aus Glas oder anderem sprödem Material, die durch geeignete Positionierhilfsmittel 32, z.B. Rahmenstrukturen gemäß Fig. 6, innerhalb der Patrone 12 in gleichmäßiger Verteilung verbleiben. Die im Zickzack-Verlauf eingelegten zueinander biegsamen oder abbrechbaren Rahmenstrukturen haben dünne Streben 34 und Sprossen aus Kunststoff, der die Durchmischung nicht behindert und spröde zerfallen kann.

Entsprechend Fig. 3 ist die zweite Komponente in abgeschlossenen länglichen Ampullen 36 enthalten. Die Länge der Ampullen ist zweckmäßigerweise kleiner oder nicht viel größer als der Innendurchmesser der Patrone, so daß beim Füllen der Patrone mit dem pulverförmigen Gemenge eine gleichmäßige Verteilung der Ampullen 36 und auch die Beibehaltung dieser Verteilung vereinfacht wird.

In Fig. 4 besteht der die flüssige Komponente enthaltende Innenbehälter aus einem ungefähr schraubenförmigen Glasrohr 40, dessen Aufnahmevolumen auf die für die Zementmischung in der Patrone notwendige Menge bemessen ist. Der Innendurchmesser der aus Glas oder anderem sprödem Material bestehenden Rohrfigur ist kleiner als der Durchmesser der Ankerstange 15. Um die Flüssigkeitsmenge, wie zuvor, portioniert an das umgebende pulverförmige Gemenge abgeben zu können, kann das Glasrohr entlang seinem Verlauf mehrere, nicht gezeigte Verengungen aufweisen.

## Patentansprüche

1. Verbundanker zur Befestigung einer Ankerstange in einem Bohrloch, bestehend aus einer länglichen an beiden Enden verschlossenen Patrone aus sprödem Material, die mit Zement oder einer anderen pulverförmigen Komponente eines anorganischen Zweikomponenten-Bindemittels sowie mit einem Wasser als flüssige Komponente kapselnden Innenbehälter aus sprödem Material gefüllt ist, und aus einem Dichtelement am Bohrlocheingang, wobei die Patrone und der Innenbehälter beim Eintreiben der durch das Dichtelement hindurch geführte Ankerstange zerstört und ihre Splitter zusammen mit den freigesetzten Komponenten im Bohrloch vermischt werden,
**dadurch gekennzeichnet**,
daß der Innenbehälter (22) aus über die Länge der Patrone (12) verteilt angeordneten und beim Eintreiben der Ankerstange (15) nacheinander zerstörbaren Innenbehälterabschnitten (26; 30; 36) besteht, welche die flüssige Komponente portioniert schrittweise freigeben, so daß die die einzelnen Innenbehälterabschnitte umgebenden Teilmengen der pulverförmigen Komponente in sämtlichen Bereichen der Bohrlochlänge, auch der eines aufwärts oder geneigt verlaufenden Bohrloches, gleichmäßig mit der flüssigen Komponente getränkt und vermischt wird.

2. Verbundanker nach Anspruch 1, dadurch gekennzeichnet, daß der Innenbehälter (22) eine im allgemeinen lineare Folge von Ausbauchungen (26) und Verengungen (28) aufweist, die sich ungefähr über die Länge der Patrone (12) erstreckt, wobei die Ausbauchungen am vorderen und rückwärtigen Ende des Innenbehälters geschlossen sind.

3. Verbundanker nach Anspruch 2, dadurch gekennzeichnet, daß der Innenbehälter (22) an den Verengungen (28) zwischen den Ausbauchungen (26) jeweils geschlossen ist.

4. Verbundanker nach einem der vorhergehenden Ansprüche, dadurch gekennzeichnet, daß zur Zentrierung des Innenbehälters spinnenförmige Positioniermittel dünne Radialarme aufweisen, die von einem auf eine Verengung des Innenbehälters aufschiebbaren Mittelteil, z.B. einem offenen Ring, ausgehen und sich etwa bis zur Patronenwand erstrecken.

5. Verbundanker nach Anspruch 1, dadurch gekennzeichnet, daß der Innenbehälter in eine Mehrzahl geschlossener, vorzugsweise größer als der Radius der Patrone bemessener Kugeln (30) aufgeteilt ist, die innerhalb der pulverförmigen Komponente (20) in der Patrone (12) verteilt angeordnet sind.

6. Verbundanker nach Anspruch 1, dadurch gekennzeichnet, daß der Innenbehälter in eine Mehrzahl geschlossener länglicher Ampullen (36) aufgeteilt ist, deren Länge kleiner oder nicht viel größer als der Innendurchmesser der Patrone ist und die innerhalb der pulverförmigen Komponente (20) in der Patrone (12) verteilt angeordnet sind.

7. Verbundanker nach Anspruch 5 oder 6, dadurch gekennzeichnet, daß zur gleichmäßigen Verteilung der Innenbehälterteile über die Länge der Patrone (12) vorzugsweise aus sprödem Material bestehende Abstandshalter in Form von dünnen Armkreuzen oder Rahmenstrukturen vorgesehen sind, die sich an der Innenwand der Patrone abstützen.

8. Verbundanker nach Anspruch 1, dadurch gekennzeichnet, daß der Innenbehälter aus einem im allgemeinen schraubenförmigen Glasrohr (40) besteht, das entlang seinem Rohrverlauf mehrere Verengungen aufweist, wobei der Innendurchmesser der Schraube kleiner ist als der Durchmesser der Ankerstange.

9. Verbundanker nach einem der vorhergehenden Ansprüche, dadurch gekennzeichnet, daß als Dichtelement am Bohrlocheingang eine aus nachgiebigem Material bestehende Verschlußkappe (14) dient, die einen von der Ankerstange (15) perforierbaren Deckel (16) und einen axialen Rand (18) aufweist, der die Patrone (12) umfaßt und eine an der Bohrlochwand anliegende Dichtung bildet.

10. Verbundanker nach Anspruch 9, dadurch gekennzeichnet, daß die Verschlußkappe (14) vorgeprägte radiale Schnittlinien enthält, durch die beim Eintreiben der Ankerstange sich an deren Umfang abdichtend anlegende Lamellen (19) entstehen.

11. Verbundanker nach Anspruch 9, dadurch gekennzeichnet, daß die Verschlußkappe (14) eine zentrische Öffnung enthält, deren Rand einen Wulst oder Manschette zur abgedichteten Anlage am Umfang der Ankerstange bildet.

12. Verbundanker nach einem der Ansprüche 9 bis 11, dadurch gekennzeichnet, daß der Deckel (16) als Anschlag zur Einsteckbegrenzung für die Verschlußkappe (14) einen größeren Durchmesser als deren axialer Rand (18) aufweist.

## Claims

1. Compound anchor to affix an anchor shank in a borehole, consisting of an elongated cartridge made of a brittle material and closed at both ends and filled with cement or another powder component of an inorganic, binary binder and also with in a brittle inside container encasing water as the liquid component, and of a sealing element at the borehole entry, the cartridge and the inside container being destroyed when the anchor shank is forced through the sealing element and the cartridge's splinters being mixed together with the released components in the borehole,
characterized in that
the inside container (22) consists of inside-container portions (26; 30; 36) distributed over the length of the cartridge (12) and being sequentially destroyed by forcing in, whereby to gradually release the included water portions such that the portions of powder component surrounding said inside-container portions are uniformly mixed and soaked with water in all areas of the length of the borehole (10), even in those of an upwardly extending or inclined borehole.

2. Compound anchor defined in claim 1, characterized in that the inside container (22) comprises a generally linear sequence of bulges (26) and constrictions (28) extending approximately over the length of the cartridge (12), the bulges at the front and rear ends of the inside container being closed.

3. Compound anchor defined in claim 2, characterized in that the inside container (22) is closed at each constriction (28) between the bulges (26).

4. Compound anchor defined in one of the above claims, characterized in that to center the inside container, spider-like positioning means have thin radial arms starting from a central part, for instance an open ring, which can be slipped onto a constriction of the inside container, and which extend as far approximately as the cartridge wall.

5. Compound anchor defined in claim 1, characterized in that the inside container is divided into a plurality of closed globes (30) preferably larger than the cartridge radius and distributed inside the powder component (20) in the cartridge (12).

6. Compound anchor defined in claim 1, characterized in that the inside container is divided into a plurality of elongated ampules (36) of which the length is less than, or not much more than the inside cartridge diameter and which are distributed inside the powder component (20) inside the cartridge (12).

7. Compound anchor defined in either of claims 5 and 6, characterized in that to uniformly distribute the inside-container parts over the length of the cartridge (12) spacers preferably made of a brittle material and in the shape of thin spiders or frame structures are provided, which rest against the cartridge inside wall.

8. Compound anchor defined in claim 1, characterized in that the inside container consists of a glass tube (40) having generally the shape of a helix, said glass tube evincing along its course several constrictions, the helix inside diameter being less than the anchor-shank diameter.

9. Compound anchor defined in one of the above claims, characterized in that as sealing element at the borehole entry serves an elastic sealing cap (14) comprising a lid (16) which can be pierced by the anchor shank (15) and an axial rim (18) enclosing the cartridge (12) and forming a seal resting against the borehole wall.

10. Compound anchor defined in claim 9, characterized in that the sealing cap (14) comprises pre-embossed radial cutting lines which upon the penetration of the anchoring shank produce lamellas (19) resting in sealing manner against the periphery of said shank.

11. Compound anchor defined in claim 9, characterized in that the sealing cap (14) has a central orifice of which the rim forms a bead or collar resting in sealing manner against the periphery of the anchor shank.

12. Compound anchor defined in one of claims 1 through 9, characterized in that the lid (16) has a larger diameter than that of the axial rim (18) of the sealing cap (14) in order to act as a stop limiting the inserting depth of the said sealing cap (14).

## Revendications

1. Dispositif d'ancrage composite pour la fixation d'une tige d'ancrage dans un trou, se composant d'une cartouche en un matériau cassant, fermée aux deux extrémités, qui est remplie de ciment ou d'un autre constituant en poudre d'un liant inorganique à deux composants, ainsi que d'un réservoir intérieur en matériau cassant contenant de l'eau comme composant liquide, et d'un élément d'étanchéité à l'entrée du trou, la cartouche et le réservoir intérieur étant détruits lors de l'enfoncement de la tige d'ancrage traversant l'élément d'étanchéité et leurs fragments se mélangeant dans le trou aux composants libérés,
caractérisé en ce que le réservoir intérieur (22) consiste en des éléments de réservoir intérieur (26;30;36) qui sont répartis sur la longueur de la cartouche (12) et qui, lors de l'enfoncement de la tige d'ancrage (15) sont destructibles les uns après les autres, libérant alors le composant liquide successivement par portions, de telle manière que les parties du composant en poudre qui entourent les éléments de réservoir intérieur individuels dans toutes les zones de la longueur du trou, et même d'un trou coudé vers le haut ou incliné, soient uniformément imprégnées par le composant liquide et mélangées à celui-ci.

2. Dispositif d'ancrage composite selon la revendication 1, caractérisé en ce que le réservoir intérieur (22) présente une succession globalement linéaire d'évasements (26) et d'étranglements (28) s'étendant à peu près sur toute la longueur de la cartouche (12), les évasements situés à l'extrémité avant et à l'extrémité arrière du réservoir intérieur étant fermés.

3. Dispositif d'ancrage composite selon la revendication 2, caractérisé en ce que le réservoir intérieur (22) est chaque fois fermé au niveau des étranglements (28) entre les évasements (26).

4. Dispositif d'ancrage composite selon l'une quelconque des revendications précédentes, caractérisé en ce que, pour le centrage du réservoir intérieur, des moyens de positionnement filiformes présentent de minces bras radiaux qui partent d'une partie centrale, par exemple un anneau ouvert, coulissable sur un étranglement du réservoir intérieur, et qui s'étendent approximativement jusqu'à la paroi de la cartouche.

5. Dispositif d'ancrage composite selon la revendication 1, caractérisé en ce que le récipient intérieur est divisé en une pluralité de sphères (30) fermées, dimensionnées de préférence plus grandes que le rayon de la cartouche et qui sont réparties dans le composant en poudre (20) dans la cartouche (12).

6. Dispositif d'ancrage composite selon la revendication 1, caractérisé en ce que le récipient intérieur est divisé en une pluralité d'ampoules oblongues fermées (36) dont la longueur est inférieure ou à peine supérieure au diamètre inférieur de la cartouche et qui sont réparties dans le composant en poudre (20) dans la cartouche (12).

7. Dispositif d'ancrage composite selon la revendication 5 ou 6, caractérisé en ce que, pour une répartition régulière des éléments du réservoir intérieur sur la longueur de la cartouche (12), il est prévu des pièces d'écartement, de préférence faites d'un matériau cassant, sous la forme de minces croisillons ou de structures quadrillées, qui s'appuient contre la paroi interne de la cartouche.

8. Dispositif d'ancrage composite selon la revendication 1, caractérisé en ce que le réservoir intérieur consiste en un tube de verre (40) globalement de forme hélicoïdale, qui présente sur son parcours plusieurs étranglements, le diamètre intérieur de l'hélice étant plus petit que le diamètre de la tige d'ancrage.

9. Dispositif d'ancrage composite selon l'une quelconque des revendications précédentes, caractérisé en ce qu'un capuchon (14) fait d'un matériau souple sert d'élément d'étanchéité à l'entrée du trou, ce capuchon présentant un couvercle (16) propre à être perforé par la tige d'ancrage (15) et un bord axial (18), qui entoure la cartouche (12) et constitue un joint d'étanchéité appliqué contre la paroi du trou.

10. Dispositif d'ancrage composite selon la revendication 9, caractérisé en ce que le capuchon (14) contient des lignes de découpe radiales préformées, grâce auxquelles lors de l'enfoncement de la tige d'ancrage, des lamelles (19) sont constituées, qui s'appliquent contre sa périphérie de manière à assurer l'étanchéité.

11. Dispositif d'ancrage composite selon la revendication 9, caractérisé en ce que le capuchon (14) comporte une ouverture centrale dont le bord constitue un bourrelet ou une manchette pour une application étanche contre la périphérie de la tige d'ancrage.

12. Dispositif d'ancrage composite selon l'une quelconque des revendications 9 à 11, caractérisé en ce que le couvercle (16) présente, en tant que butée pour limiter l'introduction du capuchon (14), un plus grand diamètre que le bord axial (18) de celui-ci.
